# EUROPÄISCHE PATENTSCHRIFT

(11) **EP 2 342 067 B1**
(45) Veröffentlichungstag und Bekanntmachung des Hinweises auf die Patenterteilung: **15.08.2012**
(21) Anmeldenummer: 09741186.2
(22) Anmeldetag: 27.10.2009
(51) Int. Cl.: B29C 65/64, A47B 96/20, B29C 63/00, B32B 3/12, B29L 31/44

(54) **VERFAHREN ZUM HERSTELLEN EINES LEICHTBAUELEMENTS, UND STÜTZELEMENT**
METHOD FOR PRODUCING A LIGHTWEIGHT COMPONENT, AND SUPPORT ELEMENT
PROCÉDÉ DE FABRICATION D'UN ÉLÉMENT LÉGER DE CONSTRUCTION ET ÉLÉMENT DE SOUTIEN

(30) Priorität: 28.10.2008 CH 16902008
(43) Veröffentlichungstag der Anmeldung: 13.07.2011
(73) Patentinhaber: Woodwelding AG, 6304 Zug (CH)
(72) Erfinder: TORRIANI, Laurent, CH-2516 Lamboing (CH); LEHMANN, Mario, CH-2353 Les Pommerats (CH); AESCHLIMANN, Marcel, CH-2514 Ligerz (CH)
(74) Vertreter: Frei Patent Attorneys
(86) Internationale Anmeldenummer: PCT/CH2009/000343
(87) Internationale Veröffentlichungsnummer: WO 2010/048735

(56) Entgegenhaltungen:
- EP-A- 1 640 128
- EP-A- 1 698 738
- EP-A- 1 731 236
- EP-A- 1 932 637
- EP-A- 1 961 533
- DE-U1-202006 010 157
- US-A- 5 965 238

## Beschreibung

Die Erfindung betrifft Leichtbauplatten, wie sie im Leichtbau und der Möbelindustrie verwendet werden.

Solche Leichtbauplatten bestehen aus zwei äusseren, verhältnismässig dünnen Decklagen, bspw. Spanplatten, und einer zwischen den Decklagen angeordneten Füllung, bspw. einer Wabenstruktur aus Karton. Leichtbauplatten dieser Art sind mechanisch sehr stabil, leicht, und können optisch ansprechend wirken, wenn sie an den Kanten gut verarbeitet sind. Gerade wegen ihrem geringen Gewicht und auch wegen dem geringen Ressourcenverbrauch bei ihrer Herstellung erfreuen sie sich zunehmender Beliebtheit.

Kanten (Dekorkanten) für solche Leichtbauplatten sind bspw. an der äusseren Oberfläche versiegelte, mit dem geeigneten Dekor versehene Kunststoffbänder, die ausserdem rückseitig mit einem Kleber versehen sein können. Auch als Furnierkanten ausgebildete Dekorkanten sind erhältlich.

Die Verarbeitung der Kanten in optisch ansprechender Art ist jedoch teilweise noch nicht in befriedigender Art gelöst. Insbesondere für die Herstellung konfektionierbarer und massangefertigter Ware wäre es wünschenswert, wenn eine zugeschnittene Leichtbauplatte durch einen Handwerker nach dem Zuschneiden ohne grossen Aufwand und mit zur Verfügung stehenden Werkzeugen mit einer Kante versehen werden könnten.

Zum Befestigen der Kante ist gemäss dem Stand der Technik einerseits das Vorsehen eines sogenannten Riegels bekannt, also eines den Zwischenraum zwischen den Decklagen im Bereich der Kante vollständig ausfüllenden Spanprofils. Auf einen solchen Riegel kann dann eine kommerziell erhältliche Kante der gewünschten Art aufgeklebt werden. Solche Riegel sind mechanisch sehr stabil. Sie tragen aber markant zum Gesamtgewicht der Platte bei und sind nachträglich nur mit beträchtlichem Aufwand anbringbar. Sie eignen sich daher insbesondere für das Anbringen gleich bei der Erstellung der Leichtbauplatte, und folglich insbesondere für die industrielle Fertigung.

Andererseits sind sogenannte Stützkanten bekannt. Bei diesen handelt es sich um Kunststoffbänder bzw. Kunststofflatten, die an der Kante zwischen den Decklagen angebracht werden, wobei im Allgemeinen noch ein innenseitiges Anfräsen der Decklagen erfolgt. Auf diese Stützkante wird dann die eigentliche Kante mit dem Dekor geleimt. Die Schrift EP 1 640 128 zeigt als Variante eine Verfahren auf, bei dem die Kante vor dem Anbringen der Stützkante auf diese aufgeleimt wird.

Auch die Stützkantentechnik ist recht aufwändig und macht die Verwendung von eigens für die Stützkanten vorgesehenen Maschinen notwendig. Ihre Verwendung ist für die nicht industrielle Fertigung mit Nachteilen verbunden und sogar praktisch unmöglich.

Es ist folglich eine Aufgabe der Erfindung, ein Verfahren zum Herstellen eines Leichtbauelements und ein für ein solches Verfahren vorgesehenes Stützelement zur Verfügung zu stellen, welche Nachteile des Standes der Technik überwinden und insbesondere auch für die nicht industrielle Fertigung geeignet sind.

Diese Aufgabe wird gelöst durch die Erfindung, wie sie in den Patentansprüchen definiert ist.

Gemäss einem Aspekt der Erfindung wird vorgeschlagen, das Leichtbauelement mit zwei Decklagen, bspw. aus Holz oder einem Holzwerkstoff, und einer dazwischen angeordneten Füllung nach dem Zuschneiden mit einer thermoplastischen Material (i.A. ein ein thermoplastisches Polymer enthaltender Kunststoff) aufweisenden Kantenstütze zu versehen. Dies geschieht so, dass diese von der Schmalseite her sowohl in der ersten Decklage als auch in der zweiten Decklage verankert wird, wobei die Verankerung dadurch erfolgt, dass die Kantenstütze mit der jeweiligen Decklage in Kontakt gebracht wird, und durch eine von der Schmalseite her (also nicht durch die Decklagen hindurch) angreifende Sonotrode mechanische Schwingungen in die Kantenstütze eingekoppelt werden, wobei die Kantenstütze gleichzeitig an diese Decklage angepresst wird, derart, dass im Bereich eines Übergangs zwischen dem thermoplastischen Material und dem Holzwerkstoff der Decklage ein Teil des thermoplastischen Materials verflüssigt und in das Decklagenmaterial hineingedrückt wird, wodurch sich nach der Aushärtung eine formschlüssige Verankerung ergibt. Das wird mit einer ausgedehnten Kantenstütze in einem kontinuierlichen Prozess oder mit einer Mehrzahl von Kantenstützen in einem wiederholten Prozess durchgeführt, bis ein ausgedehnter Bereich der Schmalseite (,ausgedehnt' bedeutet bspw. dass die ,horizontale' Ausdehnung entlang der Schmalseite viel grösser ist als die Dicke des Leichtbauelements) mit der Kantenstütze bzw. mit den Kantenstützen (und u.U. mit Zwischenräumen zwischen diesen) versehen ist. Ausserdem wird an der Kantenstütze bzw. an den Kantenstützen eine Kante befestigt, derart, dass im genannten ausgedehnten Bereich der Zwischenraum zwischen den Decklagen zur Schmalseite hin abgeschlossen ist.

Gemäss einem weiteren Aspekt der Erfindung wird ein Verfahren zum Befestigen einer Kante an einem Leichtbauelement mit zwei Decklagen und einer dazwischen angeordneten Füllung zur Verfügung gestellt, wobei das Verfahren die folgenden Verfahrensschritte aufweist:
- Bereitstellen einer thermoplastisches Material aufweisenden Kantenstütze (3);
- Verankern der Kantenstütze (3) in beiden Decklagen (1.1, 1.2), wobei die Verankerung dadurch erfolgt, dass die Kantenstütze mit der jeweiligen Decklage in Kontakt gebracht wird und Energie in die Kantenstütze eingekoppelt wird, wobei die Kantenstütze (3) gleichzeitig an diese Decklage (1.1, 1.2) angepresst wird, derart, dass im Bereich eines Übergangs zwischen dem thermoplastischen Material und der Decklage ein Teil des thermoplastischen Materials verflüssigt und in die Decklage hineingedrückt wird, wodurch sich nach einer Verfestigung des thermoplastischen Materials eine formschlüssige Verankerung ergibt;
- Durchführen oder Wiederholen der Verankerung bis ein ausgedehnter Bereich der Schmalseite mit der Kantenstütze (3) oder mit einer Mehrzahl von Kantenstützen (3) versehen ist;
- Befestigen einer Kante (11; 14) an einer aussenseitigen Fläche der Kantenstütze derart, dass im dass im genannten ausgedehnten Bereich der Zwischenraum zwischen den Decklagen zur Schmalseite hin abgeschlossen ist.

Das Zuführen von Energie kann gemäss dem ersten Aspekt durch eine Sonotrode erfolgen, durch welche Vibrationen in die Kantenstütze eingekoppelt werden. Die Vibrationen können so in die Kantenstütze eingekoppelt werden, dass sie durch diese hindurch an eine Grenzfläche zu den Decklagen übertragen werden und die Verflüssigung als Folge der Reibung zwischen der Decklage und dem thermoplastischen Material und/oder von innerer Reibung des thermoplastischen Materials (bspw. unterstützt von Energierichtungsebem) im Bereich der Grenzfläche zu den Decklagen stattfindet. Als Variante kann die Verflüssigung auch im Kontakt mit einem Gegenelement bewirkt werden, welches bspw. eine Kantenstütze L-förmig hintergreifen kann und mit welchem man dem Druck der Sonotrode entgegenwirkt. Die Kopplung kann aber auch so stattfinden, dass die Verflüssigung unmittelbar im Kontakt mit der Sonotrode erfolgt, d.h. die mechanischen Schwingungen werden mit einer unter Umständen beschränkten Eindringtiefe eingekoppelt. Durch die Druckkraft wird das verflüssigte thermoplastische Material auch in diesen Ausführungsformen nach aussen und in Strukturen der Decklagen gepresst. In diesem Fall kann die Sonotrode beispielsweise die Kantentsütze L-förmig hintergreifen, so dass die Verflüssigung im Bezug auf das Leichtbauelement innenseitig an der Kantenstütze erfolgt. Ein aussenseitig angreifendes Gegenelement wird verwendet, um eine Gegenkraft zur Presskraft der Sonotrode auszuüben.

Betreffend die Verflüssigung in direktem Kontakt mit der Sonotrode oder einem Gegenelement wird auch auf die Schrift WO 2009/052 644 verwiesen, auf deren Inhalt hier ausdrücklich Bezug genommen wird.

Das Zuführen von Energie kann alternativ auch auf andere Art mechanisch, durch Heizen oder durch eine beispielsweise durch die Kantenstütze hindurch eingekoppelte Strahlung bewirkt werden, welche an der aufgerauten oder aus anderem Grund absorbierenden Grenzfläche zwischen der Kantenstütze und der Decklage absorbiert wird.

Die räumliche Orientierung betreffende Begriffe wie "horizontal" oder "vertikal", "Oberseite", "Unterseite" etc. werden im vorliegenden Text verwendet, um die Lesbarkeit zu verbessern. Sie beziehen sich auf das Leichtbauelement, wenn es mit einer Flachseite auf einer ebenen Fläche abgelegt ist, mit den Decklagen in der Horizontalen. Sie sind selbstverständlich nicht so zu interpretieren, dass das beschriebene Verfahren nur in dieser Orientierung funktioniert. Selbstverständlich kann es - insbesondere für kleinere Leichtbauelemente - auch mit bspw. vertikal orientiertem Leichtbauelement oder mit schräg gehaltenem Leichtbauelement durchgeführt werden.

Das erfindungsgemässe Vorgehen bringt den wichtigen Vorteil, dass ein verhältnismässig kostengünstiges Element - die Kantenstütze - verwendet werden kann, das ausserdem mit einfachen Mitteln - nämlich beispielsweise einem Ultraschallgerät mit Sonotrode - eingesetzt werden kann. Das Ultraschallgerät mit der Sonotrode kann ein tragbares Gerät (,handheld device') oder ein ähnlich einer fest installierten Bohrmaschine von einem Gestell geführtes Gerät sein, mit welchem nebst dem Befestigen der Kantenstütze auch andere Arbeitsschritte durchgeführt werden können. Das Ultraschallgerät kann auch eine übliche stationäre Ultraschall-Maschine, wie sie auch für industrielle Anwendungen bekannt ist; auch für die industrielle Anwendung eignet sich das erfindungsgemässe Vorgehen.

Das Vorgehen gemäss der Erfindung ermöglicht ausserdem - und es wird vorzugsweise so angewandt - dass die Füllung im Bereich der Schmalseite nicht ausgeräumt werden muss. Die Kantenstütze benötigt, auch wenn sie im Endzustand zwischen den Decklagen verlaufende Bereiche aufweist, wenig Tiefe, und bei genügend flexiblem Füllmaterial lässt sch dieses ohne Weitere hineindrücken. Weiter ermöglicht die Erfindung, dass die Decklagen nicht vorbehandelt - bspw. mit Furchen, Nuten etc. - werden müssen, d.h. vorzugsweise wird die mindestens eine Kantenstütze anschliessend ans Zuschneiden befestigt, ohne spezifisch auf die Kantenstütze zugeschnittene Verfahrensschritte, wobei solche jedoch nicht ausgeschlossen sind.

Das Befestigen der Kante geschieht vorzugsweise nach dem Verankern der Kantenstütze(n). Zwischen dem Verankerungsschritt und dem Kantenbefestigungsschritt können bspw. vorstehende Teile der Kante und eventuell der Kantenstütze(n) noch abgefräst werden. Wenn die Befestigung nach dem Verankern der Kantenstütze(n) geschieht, lassen sich insbesondere auch gekrümmte oder abgeknickte Schmalseiten bekanten, ohne dass sich übermässige Spannungen ergeben.

Die Kante kann aber auch vor dem Verankern der Kantenstütze befestigt werden; das kann schon bei der Fertigung geschehen, d.h. die Kante kann bei der Fertigung so aufgebaut werden, dass sie die Kantenstütze beinhaltet. Das schliesst auch einteilig hergestellte Ensembles von Kante und Kantenstütze mit ein, d.h. Kante und Kantenstütze(n) können in dieser Ausführungsform auch ein integriertes, homogenes oder heterogenes Bauteil sein. Das Einkoppeln der mechanischen Oszillationen erfolgt dann durch die Kante hindurch; die Sonotrode greift also aussenseitig an der Kante an.

Während des Verankerns der Kantenstütze wird vorzugsweise auf die Decklage bzw. die Decklagen eine nach innen - also zur jeweils anderen Decklage hin - gerichtete Stützkraft ausgeübt. Diese Stützkraft verhindert, dass die Decklagen beim Einbringen der Stützkanten auseinander gehen; das hilft unter anderem, die Dickentoleranzen der Leichtbauplatte einzuhalten.

Gemäss dem ersten Aspekt der Erfindung greift die Sonotrode von der Schmalseite her an, wirkt also nicht durch die Decklagen hindurch. Trotzdem liegt die Kantenstütze bevorzugt nach der Verankerung im Wesentlichen zwischen den Decklagen, steht also höchstens um wenig und vorzugsweise gar nicht hinterseitig über die Decklagen vor (d.h. ein Grossteil des Volumens, bspw. mindestens 2/3 oder mindestens 80% des Volumens des Kantenstützenmaterials befindet sich vorzugsweise nach der Verankerung zwischen den Decklagen). Besonders bevorzugt ist die Stützkante aussenseitig bündig oder sogar tiefer eingesetzt, so dass bei einer Nachbearbeitung (bspw. Fräsen, um die nötige Planarität zu erwirken)vor dem Aufbringen der eigentlichen Kante nur eventuelle Decklagen oder nur wenig von der Kantenstütze abgefräst wird.

Anschliessend an die Verankerung und vor der Befestigung der Kante kann ein Material abtragender Verarbeitungsschritt vorgenommen werden, um einen sauberen Abschluss zur Schmalseite hin zu gewährleisten, wobei Material der Decklagen und/oder der Kantenstütze(n) abgetragen werden kann.

Obwohl also bevorzugt die Kantenstütze zwischen den Decklagen liegend verankert wird und nicht stirnseitig an die Decklagen anliegend, wird doch gemäss bevorzugten Ausführungsformen die Sonotrode die Kantenstütze durch eine Presskraft in horizontaler Richtung - d.h. Kraftanwendung parallel zur Decklagenebene - gegen die Stirnseiten der Decklagen und bei gleichzeitiger Einkopplung mechanischer Oszillationen zwischen die Decklagen eintreiben. Die Verflüssigung des thermoplastischen Materials findet dabei stirnseitig and der Decklage bzw. den Decklagen und/oder durch Reibung an der Innenfläche der Decklagen statt.

Gemäss einer speziellen Ausführungsform weist die Rückenstütze eine Führungspartie auf, die schon beim Platzieren der Rückenstütze und vor dem Einkoppeln der mechanischen Oszillationen zwischen den Decklagen liegt, und zwar so, dass sie beide Decklagen innenseitig flächig berührt und dadurch beim weiter Einpressen durch die Sonotrode führend wirkt. Die Führungspartie, ragt über Kontaktflächen zu den Decklagen hinaus in den Bereich zwischen den Decklagen (d.h. je nach dem in den Bereich der Füllung) hinein.

Damit die mechanischen Oszillationen in die Kantenstütze eingekoppelt werden können, weist diese eine entsprechende Einkopplungsfläche auf. Diese liegt bei den vorstehend erwähnten Ausführungsformen mit Presskraft in horizontaler Richtung hinterseitig (also proximal) und ist im Wesentlichen vertikal, und bspw. ungefähr parallel zur Ausdehnung der Schmalseite.

Gemäss einer alternativen Ausführungsform wird die Presskraft durch die Sonotrode nicht horizontal, sondern vertikal ausgeübt. Wenn das so gemacht wird, weist die Sonotrode eine Partie auf, die beim Verankerungsprozess in den Raum zwischen den Decklagen hineinragt. Die Verankerung in der oberen und der unteren Decklage geschieht dann - im Gegensatz zur bevorzugten Situation, wenn durch eine horizontale Kraft verankert wird - nicht gleichzeitig sondern nacheinander. Ganz besonders bevorzugt ist diese Ausführungsform im Zusammenhang mit im Zickzack oder netzartig verlaufenden Kantenstützen.

Bei diesen Ausführungsformen mit vertikaler Presskraft liegt die Einkopplungsfläche beim Verankerungsprozess im Innern des Bereiches zwischen den Decklagen, und sie liegt bspw. ungefähr horizontal.

Im Folgenden werden Ausführungsformen der Erfindung anhand von Zeichnungen im Detail beschreiben. Die Zeichnungen sind schematisch und nicht massstäblich. In den Zeichnungen bezeichnen gleiche Bezugszeichen gleiche oder analoge Elemente. Es zeigen:
- **Fig.1a-1d**: Ein erfindungsgemässes Verfahren mit einer ersten Ausführungsform von Kantenstützen;
- **Fig. 2**: Eine Variante mit einer Endlos-Kantenstütze;
- **Fig. 3a und 3b**: Ein mit Kantenstützen versehenes Endlosband;
- **Fig. 4**: Eine schräg gestellte Kantenstütze;
- **Fig. 5a und 5b**: Ein erfindungsgemässes Verfahren mit einer weiteren Ausführungsform einer Kantenstütze;
- **Fig. 6a und 6b**: Ein erfindungsgemässes Verfahren mit noch einer Ausführungsform einer Kantenstütze;
- **Fig. 7**: Eine Variante einer Kantenstütze mit Hybridaufbau; und
- **Fig. 8a und 8b**: Ein Verfahren mit einer weiteren Ausführungsform von Kantenstützen in einer anderen Konfiguration.

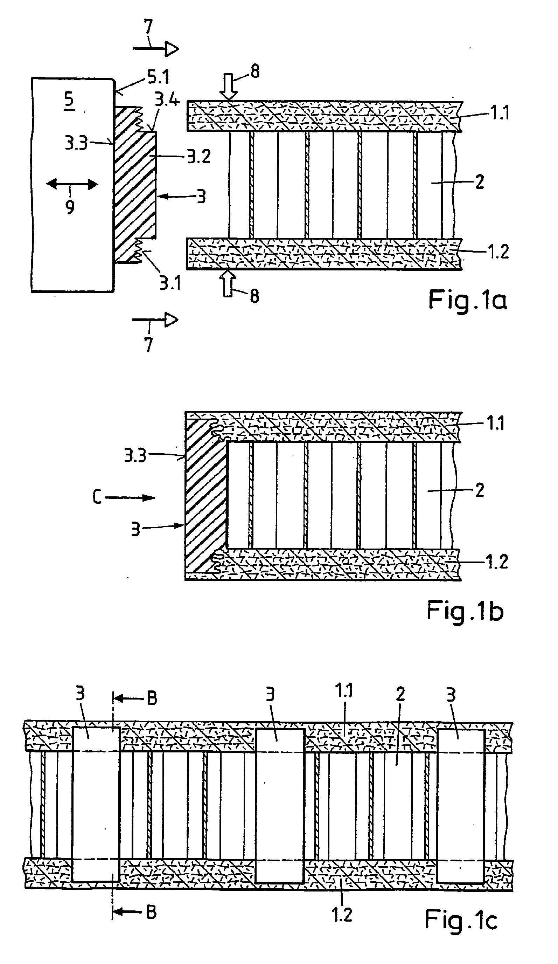

Die in **Figuren 1a-1d** ersichtliche zugeschnittene Leichtbauplatte weist - genauso wie in den nachfolgend beschriebenen Ausführungsformen - eine obere 1.1 und eine untere 1.2 Decklage auf. Die Decklagen sind aus einem Holzwerkstoff gefertigt, sie sind bspw. als Spanplatten, Faserplatten oder als Lagenhölzer (Sperrholzplatten) ausgebildet. Die Erfindung eignet sich jedoch auch für die Anwendung mit Decklagen aus anderen, unter Umständen nicht auf Holz basierenden Werkstoffen, die eine genügende mechanische Festigkeit und Dimensionsstabilität und die Strukturen aufweisen, die sich für die Interpenetrierung mit verflüssigtem thermoplastischen Material eignen, bspw. auf Kunststoff- oder Metallbasis, insbesondere auch Verbundwerkstoffe.

Die Dicke der Decklagen kann den Anwendungen entsprechend gewählt sein. Wenn die Decklagen aus einem Holzwerkstoff sind, kann die Dicke insbesondere 10 mm oder weniger, bspw. zwischen 2 mm und 8 mm betragen, da sich für solche Dicken speziell ein Bedarf für eine Abstützung der Kante ergibt.

Zwischen den Decklagen ist eine Füllung 2 angeordnet. Diese besteht aus einem im Vergleich zu den Decklagen leichten Material, bspw. einer wabenartigen Struktur aus Karton oder einem ähnlichen Material. Es sind auch andere, Stege mit dazwischen liegenden Hohlräumen bildende Füllungen denkbar, bspw. regelmässig angeordnete Leisten (das Leichtbauelement wird dann manchmal als "Stegplatte" bezeichnet) oder rohrartige Strukturen. Weiter ist auch die Verwendung von Styropor oder geeigneten Schäumen sowie, beispielsweise von Aluminiumwaben denkbar. Ganz generell ist die Erfindung nicht von der Art der Füllung abhängig und funktioniert unabhängig von deren Beschaffenheit.

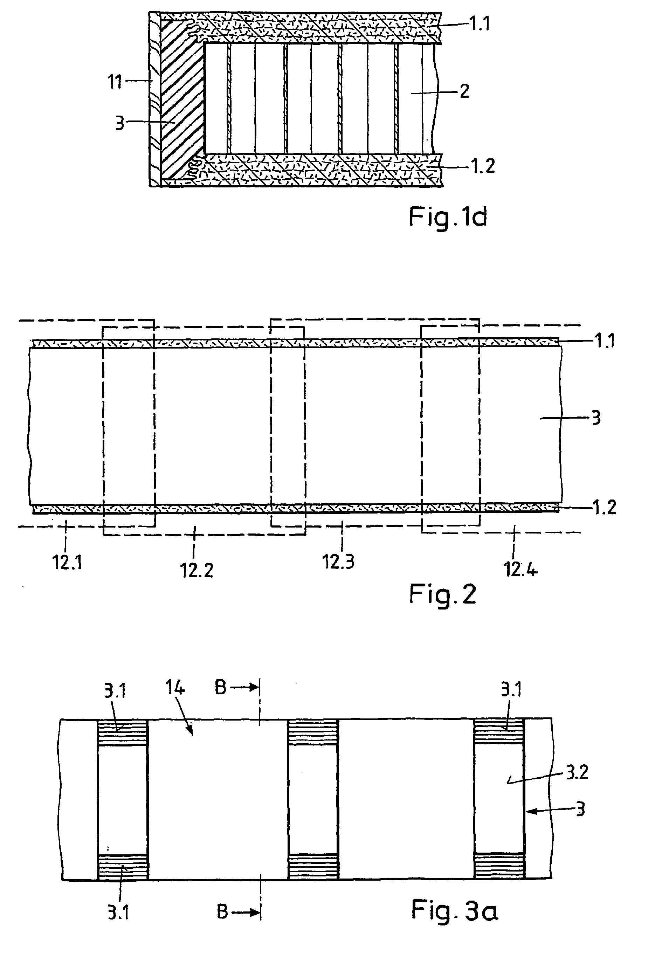

Figuren 1a, 1b und 1d zeigen Schnittdarstellungen durch ein Leichtbauelement während verschiedenen Verfahrensschritten (entsprechend einem Schnitt entlang der Linie B-B in Fig. 1c), und Fig. 1c zeigt eine Draufsicht (aus Richtung des Pfeils C in Fig. 1b) auf einen Bereich des Leichtbauelements während des erfindungsgemässen Verfahrens.

Eine Kantenstütze 3 der in **Figur 1a** gezeichneten Art besteht aus einem thermoplastischen Material, beispielsweise einem Kunststoff wie Polyamid, einem Polycarbonat oder ein Polyestercarbonat, oder auch einem Acrylnitril-Butadien-Styrol (ABS), Styrol-Acrylnitril, Polymethylmetacrylat, Polyvinylchlorid, Polyethylen, Polypropylen und Polystyrol. Das Material kann zusätzlich zum thermoplastischen Polymer auch geeignete Füller aufweisen, bspw. Verstärkungsfasern, bspw. Glas- oder Kohlefasern. Ganz generell sind alle Materialien mit einer genügend hohen Festigkeit, und genügend hohem E-Modul von bspw. mindestens 0.5 GPa geeignet, die sich durch Ultraschall lokal verflüssigen lassen. Im Allgemeinen handelt es sich bei diesen Materialien um dieselben Materialien, die sich auch zum Ultraschallschweissen eignen. Ein herausgegriffenes Beispiel für ein besonders geeignetes Material ist ABS.

Die Kantenstütze 3 hat eine vertikale Ausdehnung, die um wenig kleiner ist als die Dicke der Leichtbauplatte. Sie weist an der Kontaktfläche 3.1 zu den Decklagen 1.1 1.2 Energierichtungsgeber auf, die beispielsweise als vorstehende Ecken oder zu einer Kante zulaufende Rücken ausgebildet sind. Ausserdem ist im Bereich zwischen den Decklagen 1.1, 1.2 eine vorstehende Führungspartie 3.2 ausgebildet, deren vertikale Ausdehnung dem Abstand der Decklagen 1.1, 1.2 entspricht. Eine hinterseitige (bezogen auf die Leiterplatte, in der Konfiguration von Fig. 1a) Fläche 3.3 ist im Wesentlichen eben und als Einkopplungsfläche für die mechanischen Oszillationen geeignet. Für die Verankerung der Kantenstütze 3 an der Schmalseite der Leichtbauplatte wird die Kantenstütze an der Schmalseite positioniert und gegen diese gepresst (Pfeile 7). Die Presskraft wird durch eine Sontrode 5 ausgeübt, deren Auskopplungsfläche 5.1 flächig an der Einkopplungsfläche 3.3 anliegt. Gleichzeitig wird auf die Decklagen 1.1, 1.2 eine gegen innen gerichtete Stützkraft ausgeübt (Pfeile 8), und es werden durch die Sonotrode 5 mechanische Oszillationen 9 in die Kantenstütze 3 eingekoppelt. Die Führungspartie 3.2 stellt dabei sicher, dass die Orientierung der Kantenstütze definiert ist und dass sich beim anschliessenden Aufschmelzen kein unerwünschtes Verkippen ereignet.

Die mechanischen Schwingungen sind bspw. Ultraschalloszillationen. Im Allgemeinen werden Oszillationen in einem Frequenzbereich zwischen 2 kHz und 100 kHz, bevorzugt zwischen 10 kHz und 40 kHz, bspw. ca. 20 kHz verwendet; andere Frequenzen sind nicht ausgeschlossen. Die Leistung des die Oszillationen erzeugenden Gerätes - es kann ein marktübliches Ultraschallgerät verwendet werden - hängt von den Dimensionierungen ab, sie kann im Bereich zwischen 100 W und 2 kW liegen.

Die Presskraft 7 (und eventuell die Stützkraft 8) kann/können optional schon vor dem Einsetzen der mechanischen Oszillationen ausgeübt werden, um die Kantenstütze 3 im Bereich der Kontaktfläche 3.1 schon ein wenig in das Material der Decklagen hineinzupressen, was im nachfolgenden Schritt die Führung der Kantenstütze zusätzlich vereinfacht und eine optimale Einleitung der mechanischen Oszillationen in die Kantenstütze sicherstellen kann. Besonders günstig ist es, wenn die Stützkraft 8 schon vor dem Ansetzen der Kantenstütze ausgeübt wird, um sicherzustellen, dass während des ganzen Prozesses die Decklagen fix auf Position gehalten werden.

Sobald die mechanischen Oszillationen 9 eingekoppelt werden, wird insbesondere im Bereich der Kontaktflächen - aufgrund der Energierichtungsgeber und der Reibung mit dem Material der Decklagen - mechanisch Energie absorbiert und dadurch die Verflüssigung des thermoplastischen Materials initiiert. Das Material beginnt zu schmelzen und wird in die Decklagen 1.1, 1.2 hineingepresst. Gleichzeitig kann auch im Bereich der horizontalen Stützflächen 3.4 der Führungspartie aufgrund der Reibung mit den Decklagen ein Anschmelzen des thermoplastischen Materials erfolgen.

Nach dem Absetzen der mechanischen Oszillationen verfestigt sich das verflüssigte Material wieder, und es ergibt sich eine stabile formschlüssige Verbindung mit dem Material der Decklagen. Dies ist in **Figur 1b** dargestellt.

Dieser Verankerungsprozess wird für eine Mehrzahl von Kantenstützen 3 entlang der Schmalseite durchgeführt, wobei die Kantenstützen vorzugsweise in regelmässigen Abständen angeordnet sind, was man in **Figur 1c** besonders gut sieht.

Dabei kann jede Kantenstütze einzeln verankert werden, oder es können mit Hilfe einer ausgedehnten, mehrere Kantenstützen abdeckenden Sonotrode mehrere Kantenstützen gleichzeitig eingesetzt werden.

In der Summe ergibt sich ein ausgedehnter Bereich der Schmalseite, der so mit Kantenstützen versehen ist, dass an der flächigen, im vorhergehenden Schritt als Einkopplungsfläche für die mechanischen Oszillationen dienenden Rückseite 3.3 die Kante 11 angeklebt werden kann. Dies ist in **Figur 1d** illustriert.

Vor dem Ankleben der Kante kann gegebenenfalls noch ein Fräsen oder Schleifen der Schmalseite - inklusive Kantenstütze - stattfinden, damit das Leichtbauelement im Bereich der Schmalseite eine glatte, regelmässige Oberfläche aufweist.

In eine Kantenstütze 3 der in Figur 1a dargestellten Art kann, wenn diese transparent ausgestaltet ist anstelle von mechanischen Schwingungen oder zusätzlich zu diesen auch elektromagnetische Strahlung eingekoppelt werden, beispielsweise von der hinterseitigen Fläche 3.3 her in den Bereich der Kontaktflächen 3.1, wobei diese durch Rauhheiten, Pigmente oder andere Mittel so ausgestaltet sind, dass dort die elektromagnetische Strahlung absorbiert wird. Die Absorption hat eine Erwärmung und letztendlich eine Verflüssigung des thermoplastischen Materials im Bereich der Grenzfläche zur Folge, welche bei gleichzeitigem Ausüben einer Presskraft 7 ebenfalls zur Verankerung wie in Figur 1b dargestellt führen kann.

Figuren 1a bis 1d illustrieren das Befestigen einer Mehrzahl von diskreten, in regelmässigen Abständen angeordneten Kantenstützen. Stattdessen kann jedoch auch eine kontinuierliche Kantenstütze ("Endlos-Kantenstütze") verwendet werden. Eine solche kann beispielsweise einen Querschnitt wie den in Fig. 1a illustrierten Querschnitt der vorstehend beschriebenen diskreten Kantenstützen aufweisen. Sie kann in einem kontinuierlichen Prozess mit einer walzenartig fortbewegten Sonotrode oder mit einer in der Art eines Bügeleisens über die Rückseite bewegten Sonotrode erfolgen. Eine kontinuierliche Kantenstütze kann jedoch auch mit einem iterativen Prozess Abschnitt um Abschnitt befestigt werden, was in **Figur 2** illustriert ist. Figur 2 zeigt eine zu Figur 1c analoge Ansicht mit einer kontinuierlichen Kantenstütze 3. Die Bereiche 12.1, 12.2, 12.3, 12.4 die beim Verankern von der Sonotrode abgedeckt werden, sind gestrichelt dargestellt. Wie gezeichnet werden sie beispielsweise leicht überlappend gewählt.

Die kontinuierliche Kantenstütze wie in Fig. 2 dargestellt kann rückseitig gleich auch ein entsprechendes Dekor aufweisen und die Kante bilden, insbesondere wenn die Kante ohnehin als Laminat aufgebaut ist.

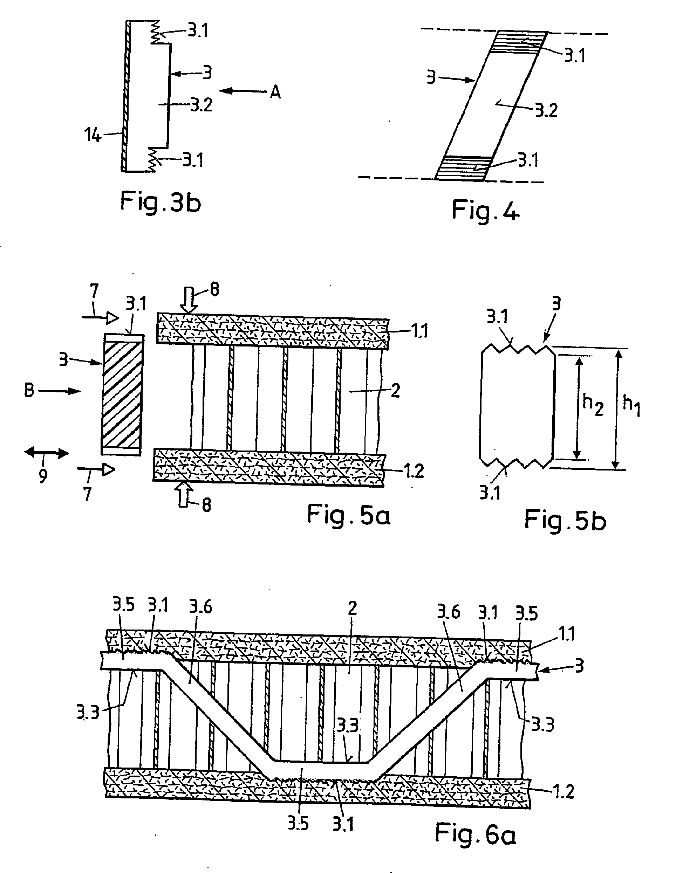

Wenn wie in Fig. 1a-1d diskrete Kantenstützen verankert werden, kann es kann von Vorteil sein, wenn die Kantenstützen 3 nicht einzeln platziert werden müssen, sondern in den idealen Abständen auf einem Verbindungselement, bspw. einem Band befestigt ausgeliefert werden. Dies ist in **Figuren 3a** **und** **3b** illustriert. Figur 3a zeigt eine Vorderansicht - d.h. eine Ansicht von der Leichtbauelement-Seite her (Pfeil A in Fig. 3b) - einer solchen Anordnung. Figur 3b zeigt die Darstellung eines Schnitts entlang der Linie B-B in Figur 3a. Die Kantenstützen 3 der in Figuren 1a-1d gezeichneten Art sind auf das Band 14 aufgeklebt oder an das Band angeschweisst. Das Band 14 kann nach der Verankerung der Kantenstützen 3 in einem Prozess der anhand Figuren 1a bis 1d beschriebenen Art abgezogen werden, oder es kann auch an Ort und Stelle verbleiben, so dass seine Rückseite als Klebstelle für das Anbringen der Kante 11 dient. Als weitere Alternative kann das Band relativ stabil ausgefertigt und rückseitig gleich mit dem gewünschten Dekor versehen sein, so dass es selbst als die Kante dient. Wenn das Verbindungselement nicht als Kante dient, muss es nicht als Band ausgestaltet sein, sondern kann bspw. auch ein Netz, ein Ensemble von mehreren, nebeneinander angeordneten schmaleren Bändern oder ein anders flexibles, die Abstände der Kantenstützen definierendes Verbindungsmittel sein.

Die in **Figur 4** gezeichnete Variante der Kantenstütze unterscheidet sich von derjenigen der Figuren 1a-1d und 3a-3b dadurch, dass sie aufgrund ihrer äusseren Form und der Form der Führungspartie schräg steht, wenn sie im Kontakt mit dem Leichtbauelement platziert wird. Das hat insbesondere dann Vorteile, wenn anschliessend an die Verankerung die Schmalseite noch gefräst oder geschliffen wird. Bei einer graden Anordnung - d.h. wenn die Kantenstütze senkrecht auf die Flachseiten steht - besteht die Gefahr dass die Kantenstütze als Ganze von einem Fräs- oder Schleifkopf erfasst und schlimmstenfalls ausgerissen wird. Durch das Schrägstellen kann der Kopf kontinuierlich an der Kantenstütze angreifen.

Durch die schräge Stellung der Kantenstütze wird ausserdem ermöglicht, dass die Kante auf eine grössere Länge abgestützt wird.

Die Variante gemäss Figur 4 kann - wie durch die gestrichelten Linien angedeutet - ebenfalls optional auf einem Band vormontiert sein.

**Figuren 5a und 5b** zeigen eine Ausführungsform bei welcher die Kontaktflächen 3.1 mit den Energierichtungsgebern im verankerten Zustand nicht stirnseitig an der Schmalseite anliegen, sondern, in die Schmalseite angrenzend, innenseitig an den Decklagen 1.1, 1.2. Eine äussere Höhe *h₁*, d.h. die Höhe zwischen den Kanten oder Spitzen der Energierichtungsgeber gemessen, ist dabei so bemessen, dass sie grösser ist als der Abstand der Decklagen 1.1, 1.2. Mit anderen Worten stehen die Energierichtungsgeber beim Einführen der Kantenstütze 3 zwischen die Decklagen an diesen an, so dass wie bei den vorstehend beschriebenen Beispielen eine horizontale Presskraft 7 entlang der Leichtbauelement-Ebene angewandt werden kann. Eine innere Höhe h*₂*, d.h. eine Höhe ohne die Energierichtungsgeber kann ungefähr dem Abstand der Decklagen entsprechen.

In der Ausführungsform gemäss Figuren 5a und 5b erfolgt die Verankerung primär innenseitig an den Decklagen. Die Ausführungsform hat den Vorteil, dass die Kantenstütze ganz zwischen den Decklagen verschwinden kann, d.h. Presskraft 7 und mechanische Oszillationen 9 können appliziert werden, bis die Sonotrode stirnseitig an den Decklagen ansteht. Bei einer entsprechenden Ausformung der Sonotrode kann die Kantenstütze sogar um ganz wenig versenkt werden.

Auch wenn bei der Kantenstütze dieser Ausführungsform keine über die Kontaktfläche 3.1 vorstehende Führungspartie vorhanden ist, kann der eigentliche Kantenstützenkörper (d.h. die Kantenstütze ohne die Energierichtungsgeber) beim Einbringen führend wirken, wenn die innere Höhe *h₂* entsprechend dem Abstand der Decklagen gewählt wird. Das gilt auch, wenn die Kantenstütze gemäss Fig. 5a, Fig. 5b analog zu Fig. 4 schräg ausgebildet ist.

Auch bei Kantenstützen dieser Ausführungsform wird eine Stützkraft 8 auf beide Decklagen ausgeübt. Die Stützkraft 8 ist hier speziell wichtig, da das Einbringen der Kantenstütze gemäss Figuren 5a und 5b tendenziell die beiden Decklagen auseinander stossen würde, wenn keine Stützkraft vorhanden wäre.

Auch die Ausführungsform gemäss Fig. 5a und 5b kann - wie diejenige gemäss Figuren 1a-1d sowohl durch die Verankerung einzelner Kantenstützen, die Verankerung von mehreren miteinander durch ein Band (oder Netz oder dergleichen; ein Band kann optional die Kante bilden) verbundenen Kantenstützen oder durch die Verankerung einer kontinuierlichen Kantenstütze (mit oder ohne Kante) realisiert werden.

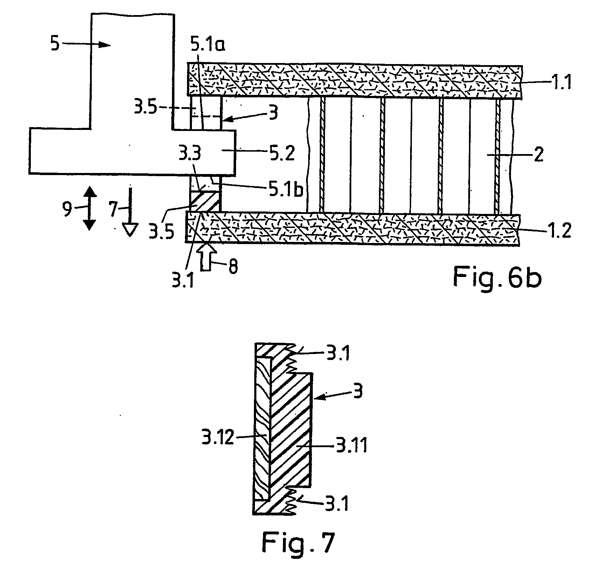

Es ist ein bevorzugtes Prinzip der Erfindung, dass die Sonotrode von der Schmalseite her - also nicht durch die Decklagen hindurch - auf die Kantenstütze einwirkt. In den vorstehend beschriebenen Ausführungsformen wirkt die Presskraft 7 von der Stirnseite her, also horizontal. Nachfolgend wird anhand von **Figuren 6a** **und** **6b** eine Ausführungsform beschrieben, bei welcher die Sonotrode ebenfalls von der Schmalseite her auf die Kantenstütze einwirkt, bei welcher die Presskraft jedoch vertikal angesetzt wird.

Figur 6a zeigt eine zu Fig. 1c analoge Ansicht von der Vorderseite her, Figur 6b eine Schnittdarstellung mit Sonotrode. Wie man in **Figur 6a** am besten sieht, verläuft die Kantenstütze 3 kontinuierlich, also wie in Fig. 2 als "Endlos-Kantenstütze". Die Kantenstütze 3 weist horizontale Bereiche 3.5, die an jeweils mit der Kontaktfläche 3.1 an einer der Decklagen 1.1 bzw. 1.2 anliegen sowie diese verbindende Übergangsbereiche 3.6 auf. Die horizontalen Bereiche 3.5 befinden sich jeweils abwechslungsweise innenseitig an der oberen 1.1 und an der unteren 1.2 Decklage.

**Figur 6b** illustriert wie die Kantenstütze 3 gemäss Figur 6a im Leichtbauelement verankert wird. Die Sonotrode hat die Form eines T- oder L-Stücks mit einer seitlich herausragenden Partie 5.2, die in den Zwischenraum zwischen die Decklagen 1.1, 1.2 eingeführt wird. Die Oberseite 5.1a und die Unterseite 5.1b dieser Partie bilden die Auskopplungsflächen für die Verankerung eines oberen horizontalen Bereichs 3.5 in der oberen Decklage 1.1 bzw. eines unteren horizontalen Bereichs 3.5 in der unteren Decklage. Figur 6b illustriert die Situation bei der Verankerung eines unteren horizontalen Bereichs 3.5. Die Presskraft 7 ist gegen unten gerichtet. Die Stützkraft 8 ist in dieser Ausführungsform gleichzeitig die der Presskraft entgegengebrachte Gegenkraft. Sie kann bei der Verankerung auf der Unterseite einfach durch das Aufliegen des Leichtbauelements auf einer horizontalen Unterlage aufgebracht werden. Bei der Verankerung der oberen horizontalen Bereiche - mit einer gegen oben gerichteten Presskraft - wird die - dann an der oberen Decklage 1.1 angreifende - Gegenkraft mit Vorteil aktiv aufgebracht.

Bei der Verankerung der Kantenstütze 3 werden beispielsweise der Schmalseite entlang abwechslungsweise obere und untere Bereiche verankert. Es ist jedoch auch möglich, bspw. zuerst alle oberen, dann alle unteren Bereiche zu verankern. Optional kann das mit einem Umkehren des Leichbauelements als Ganzem einhergehen. In letzterem Fall kann sich ein aktives Aufbringen der Gegenkraft erübrigen, indem beim Verankern immer nach unten gedrückt wird und die Stützkraft immer von der Unterlage, gegen die die Presskraft gerichtet ist, aufgebracht werden kann.

Das Anbringen der Kante mit dem Dekor erfolgt analog zu obigen Ausführungsformen; auch hier kann vorgängig ein Fräsen oder Schleifen der Schmalseite erfolgen. Dazu eignet sich diese Ausführungsform sogar besonders, da wie illustriert die Kantenstütze zur Stirnseite der Decklagen nach hinten versetzt verankert werden kann. Wenn man das so macht, ist ein Abtragen der Decklagen so weit, bis sie mit der Kantenstütze bündig sind eine Notwendigkeit, damit ein Ankleben der Kante möglich wird.

Im Unterschied zu den vorstehend beschriebenen Ausführungsformen dient jedoch beim Beispiel gemäss Fig. 6a und 6b selbstverständlich nicht die Einkopplungsfläche als die rückseitige Fläche zum Befestigen der Kante, sondern die aussenseitige Fläche.

Noch viele weitere Ausführungsformen sind denkbar, bspw. mit netz- oder gitterartigen Kantenstützen, anders ausgebildeten Sonotroden etc. Es ist auch möglich, die Kantenstütze aus mehreren Materialien aufzubauen und nicht nur aus einem wie in den illustrierenden vorstehenden Beispielen. **Figur 7** zeigt eine Kantenstütze 3, die mindestens im Bereich der Kontaktfläche 3.1 einen thermoplastischen Teil 3.11 sowie einen nicht thermoplastischen Teil 3.12, bspw. aus einem Holz enthaltenden Baumaterial aufweist. Wenn ein solcher Teil 3.12 rückseitig angebracht ist, kann das bspw. insbesondere für das Verkleben mit der Kante vorteilhaft sein.

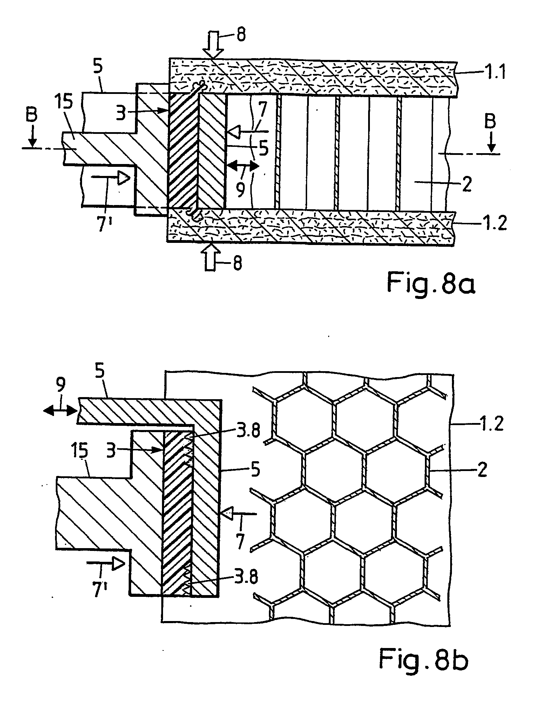

In **Figuren 8a** und **8b** ist eine Anordnung gezeichnet, in welcher die Sonotrode 5 innenseitig an der Kantenstütze 3 angreift und die Presskraft 7 von innen her ausübt. Figur 8a zeigt eine zu Figuren 1a, 1b, 1d, 5a und 6b analoge Schnittdarstellung, Figur 8b einen Schnitt entlang der Linie B-B in Figur 8a. Die mechanischen Schwingungen 9 werden in die Sonotrode 5 eingekoppelt, welche die Kantenstütze L-förmig hintergreift. Ein Gegenelement 15 wird verwendet, um die notwendige Gegenkraft 7' aufzubringen. Die Verflüssigung findet hier im Bereich der Grenzfläche zwischen der Sonotrode 5 und der Kantenstütze 3 statt, wobei die Kantenstütze Energierichtungsgeber 3.8 aufweisen kann, wodurch die Verflüssigung aufgrund der in die Kantenstütze eingekoppelten Schwingungen zuverlässig unmittelbar an der Grenzfläche stattfindet. Wie in Figur 8a angedeutet wird das verflüssigte thermoplastische Material aufgrund der Presskraft nach oben und unten verdrängt und in Strukturen der Decklagen hineingedrückt, was die Verankerung bewirkt. Auch wenn die Durchdringung des Decklagen mit thermoplatischem Material im Allgemeinen nicht so intensiv sein wird, wie wenn die Kantenstütze selbst gegen die Decklage gepresst und im Kontakt mit dieser verflüssigt wird, so kann sich doch auch bei dieser Vorgehensweise eine ausreichende Verankerung ergeben.

In einer zu Figuren 8a und 8b fast identischen Anordnung können die mechanischen Schwingungen auch von der Aussenseite her in die Kantenstütze 3 eingekoppelt werden, wobei die Verflüssigung im Kontakt mit dem Gegenelement stattfindet. In einer solchen Anordnung sind in Figuren 8a und 8b die Rollen der Sonotrode und des Gegenelements vertauscht, d.h. es bezeichnet dann in 15 die Sonotrode und 5 das Gegenelement. Die Schwingungen 9 werden in dann in die Sonotrode 15 eingekoppelt, 7' bezeichnet die Presskraft und 7 die Gegenkraft.

Das Verfahren gemäss Figuren 8a und 8b bzw. dessen Variante kann auch durchgeführt werden, indem anstatt mechanische Energie andere Energie in die Kantenstütze eingekoppelt wird, beispielsweise Wärme. Anstelle einer Sonotrode wird als Werkzeug dann ein Heizelement verwendet.

## Patentansprüche

1. Verfahren zum Befestigen einer Kante an einem Leichtbauelement mit zwei Decklagen (1.1, 1.2) und einer dazwischen angeordneten Füllung (2), aufweisend die folgenden Verfahrensschritte:
- Bereitstellen einer thermoplastisches Material aufweisenden Kantenstütze (3);
- Verankern der Kantenstütze (3) in beiden Decklagen (1.1, 1.2), wobei die Verankerung dadurch erfolgt, dass die Kantenstütze mit der jeweiligen Decklage in Kontakt gebracht wird und durch eine von der Schmalseite her angreifende Sonotrode (5) mechanische Schwingungen in die Kantenstütze eingekoppelt werden, wobei die Kantenstütze (3) gleichzeitig an diese Decklage (1.1, 1.2) angepresst wird, derart, dass im Bereich eines Übergangs zwischen dem thermoplastischen Material und der Decklage ein Teil des thermoplastischen Materials verflüssigt und in die Decklage hineingedrückt wird, wodurch sich nach einer Verfestigung des thermoplastischen Materials eine formschlüssige Verankerung ergibt;
- Durchführen oder Wiederholen der Verankerung bis ein ausgedehnter Bereich der Schmalseite mit der Kantenstütze (3) oder mit einer Mehrzahl von Kantenstützen (3) versehen ist;
- Befestigen einer Kante (11; 14) an einer aussenseitigen Fläche der Kantenstütze derart, dass im genannten ausgedehnten Bereich der Zwischenraum zwischen den Decklagen zur Schmalseite hin abgeschlossen ist.

2. Verfahren nach Anspruch 1, **dadurch gekennzeichnet, dass** die Befestigung der Kante (14) an der aussenseitigen Fläche vor der Verankerung und beispielsweise schon bei der Herstellung erfolgt.

3. Verfahren nach Anspruch 1, **dadurch gekennzeichnet, dass** die Befestigung der Kante (11) an der aussenseitigen Fläche nach der Verankerung erfolgt.

4. Verfahren nach Anspruch 3, **dadurch gekennzeichnet, dass** zwischen der Verankerung und der Befestigung der Kante im genannten ausgedehnten Bereich der Schmalseite entlang ein Material der Decklagen und/oder Material der Kantenstütze (3) bzw. der Kantenstützen abtragender Verarbeitungsschritt vorgenommen wird.

5. Verfahren nach Anspruch 3 oder 4, **dadurch gekennzeichnet, dass** die Kantenstütze (3) parallel zur den Decklagen verlaufende erste Bereiche (3.5) und diese verbindende Übergangsbereiche (3.6) aufweist wobei die ersten Bereiche (3.5) bei der Verankerung durch die Sonotrode (5) durch eine senkrecht zu den Decklagen (1.1, 1.2) wirkende Kraft (7) innenseitig an eine der Decklagen angepresst werden.

6. Verfahren nach Anspruch 5, **dadurch gekennzeichnet, dass** die Übergangsbereiche derart schräg verlaufen, dass die Kantenstütze als Ganze einen Zickzackverlauf mit abwechslungsweise an der ersten (1.1) und an der zweiten (1.2) Decklage anliegenden ersten Bereichen (3.5) oder eine netzartige Struktur aufweist.

7. Verfahren nach einem der Ansprüche 1 bis 4, **dadurch gekennzeichnet, dass** die Kantenstütze gleichzeitig in der oberen und in der unteren Decklage verankert wird.

8. Verfahren nach einem Anspruch 7, **dadurch gekennzeichnet, dass** eine Mehrzahl von diskreten, optional durch ein Verbindungselement miteinander verbundenen, Kantenstützen (3) verankert werden, wobei die Kantenstützen (3) bei der Verankerung durch eine parallel zu den Decklagen angesetzte Kraft von der Schmalseite her gegen die Decklagen gepresst werden.

9. Verfahren nach Anspruch 8, **dadurch gekennzeichnet, dass** die Kantenstützen eine nach der Verankerung einen zwischen den Decklagen verlaufenden, diese verbindenden, körperhaften Bereich aufweisen.

10. Verfahren nach Anspruch 9, **dadurch gekennzeichnet, dass** die Kantenstützen (3) eine Führungspartie (3.2) aufweisen, die vor dem Einkoppeln der mechanischen Schwingungen zwischen die Decklagen eingeführt wird und innenseitig beide Decklagen (1.1, 1.2) flächig berührt.

11. Verfahren nach Anspruch 9, **dadurch gekennzeichnet, dass** die Kantenstützen (3) vor der Verankerung eine Ausdehnung senkrecht zu den Decklagen (1.1, 1.2) aufweisen, die grösser ist als der Abstand der Decklagen, und dass sich die Kantenstützen nach der Verankerung vollständig zwischen den Decklagen befinden.

12. Verfahren nach einem der vorangehenden Ansprüche, **dadurch gekennzeichnet, dass** während des Verankerns der Kantenstütze (3) eine nach innen gerichtete Stützkraft (8) auf die Decklage (1.1, 1.2) bzw. die Decklagen ausgeübt wird.

13. Verfahren zum Herstellen eines Leichtbauelements mit den Schritten:
- Bereitstellen einer Leichtbauplatte aus mit zwei Decklagen und einer dazwischen angeordneten Füllung;
- Abtrennen eines Zuschnitts von der Leichtbauplatte;
- Befestigen einer Kante am Zuschnitt mit einem Verfahren nach einem der vorangehenden Ansprüche.

14. Kantenstütze für ein Verfahren nach einem der vorangehenden Ansprüche, aufweisend ein thermoplastisches Material, welches Kontaktflächen (3.1) zum Anliegen an beiden Decklagen (1.1, 1.2) eines Leichtbauelements bildet, wobei die Kantenstütze als Ganze so ausgebildet ist, dass sie beim Anliegen der Kontaktflächen (3.1) an die Decklagen frei von vertikal über die Decklagen hinausragenden Elementen ist, und wobei die Kantenstütze ferner eine Einkoppelfläche (3.3) zum Einkoppeln von mechanischen Oszillationen bei gleichzeitigem Anpressen mindestens einer der Kontaktflächen (3.1) an eine der Decklagen (1.1, 1.2) aufweist, derart, dass thermoplastisches Material im Bereich der Kontaktfläche (3.1) verflüssigt und in die Decklage hinein gepresst wird, und wobei die Kantenstütze mindestens Bereiche (3.2, 3.5, 3.6) aufweist, die dafür ausgebildet sind, nach dem Einkoppeln der mechanischen Oszillationen im Bereich zwischen den Decklagen zu verlaufen, und ferner eine aussenseitige, senkrecht zu den Decklagen und parallel zum Verlauf der Schmalseite verlaufende Befestigungsfläche zum Befestigen einer Kante mit Dekor bilden oder eine solche Kante mit Dekor aufweisen,
**gekennzeichnet durch** Energierichtungsgeber im Bereich der Kontaktflächen (3.1).

## Claims

1. A method for fastening an edge to a lightweight component having two cover layers (1.1, 1.2) and a filling (2) arranged between the cover layers, comprising the following method steps:
- providing an edge support (3) comprising a thermoplastic material;
- anchoring the edge support (3) in both cover layers (1.1, 1.2), wherein the anchorage takes place by the edge support being brought into contact with the respective cover layer and mechanical vibrations being coupled into the edge support by a sonotrode (3) acting from the narrow side, wherein the edge support (3) is at the same time pressed against this cover layer (1.1, 1.2) in such a way that, in the region of an interface between the thermoplastic material and the cover layer, part of the thermoplastic material is liquefied and forced into the cover layer, by which means a positively engaging anchorage is obtained after hardening of the thermoplastic material;
- carrying out or repeating the anchorage until an extended region of the narrow side is provided with the edge support (3) or with a plurality of edge supports (3);
- fastening an edge (11; 14) to an outer surface of the edge support in such a way that, in said extended region, the intermediate space between the cover layers is closed toward the narrow side.

2. The method according to claim 1, **characterized in that** the fastening of the edge (14) to the outer surface takes place before the anchorage and, for example, already during production.

3. The method according to claim 1, **characterized in that** the fastening of the edge (11) to the outer surface takes place after the anchorage.

4. The method according to claim 3, **characterized in that** between the steps of anchoring and of fastening the edge, a processing step is performed in which material of the cover layers and/or material of the edge support (3) or the edge supports is removed in said extended region of the narrow side.

5. The method according to claim 3 or 4, **characterized in that** the edge support (3) comprises first regions (3.5) running parallel to the cover layers, and transitional regions (3.6) connecting said first regions, wherein during the anchorage the first regions (3.5) are pressed against the inside of one of the cover layers by the sonotrode (5), by a force (7) acting perpendicularly to the cover layers (1.1, 1.2).

6. The method according to claim 5, **characterized in that** the transitional regions run at such an angle that the edge support as a whole comprises a zigzag course, with first regions (3.5) lying alternately against the first cover layer (1.1) and against the second cover layer (1.2), or a web-like structure.

7. The method according to one of claims 1 to 4, **characterized in that** the edge support is anchored simultaneously in the upper and lower cover layers.

8. The method according to claim 7, **characterized in that** a plurality of discrete edge supports (3), optionally connected to one another by a connecting element, are anchored, wherein during the anchorage, the edge supports (3) are pressed against the cover layers from the narrow side, by a force applied parallel to the cover layers.

9. The method according to claim 8, **characterized in that** after the anchorage, the edge supports comprise a body-like region running between, and connecting, the cover layers.

10. The method according to claim 9, **characterized in that** the edge supports (3) comprise a guiding portion (3.2), which is inserted between the cover layers before the coupling-in of the mechanical vibrations and is in surface-area contact with the inside of both cover layers (1.1, 1.2).

11. The method according to claim 9, **characterized in that**, before the anchorage, the edge supports (3) comprise an extent perpendicular to the cover layers (1.1, 1.2) that is greater than the distance between the cover layers, and **in that**, after the anchorage, the edge supports are located completely between the cover layers.

12. The method according to one of the preceding claims, **characterized in that**, during the anchorage of the edge support (3), an inwardly directed supporting force (8) is exerted on the cover layer (1.1, 1.2) or the cover layers.

13. A method for producing a lightweight component with the steps of:
- providing a lightweight building board comprising two cover layers and a filling arranged in between;
- detaching a cut-to-size piece from the lightweight building board;
- fastening an edge to the cut-to-size piece by a method as claimed in one of the preceding claims.

14. An edge support for a method according to one of the preceding claims, comprising a thermoplastic material, which forms contact surfaces (3.1) for lying against both cover layers (1.1, 1.2) of a lightweight component, wherein the edge support as a whole is shaped in such a way that, when the contact surfaces (3.1) are lying against the cover layers, the edge support is free from elements protruding vertically beyond the cover layers, and wherein the edge support also comprises a coupling-in surface (3.3) for coupling in mechanical oscillations while at the same time at least one of the contact surfaces (3.1) is being pressed against one of the cover layers (1.1, 1.2) in such a way that thermoplastic material in the region of the contact surface (3.1) is liquefied and pressed into the cover layer, and wherein the edge support comprises at least regions (3.2, 3.5, 3.6) which are formed to run in the region between the cover layers after the coupling-in of the mechanical oscillations, and also forum an outer fastening surface, running perpendicularly to the cover layers and parallel to the course of the narrow side, for fastening an edge with a decoration, or comprise such an edge with a decoration, **characterized by** energy directors in the region of the contact surfaces (3.1).

## Revendications

1. Procédé de fixation d'un chant sur un élément léger de construction qui présente deux couches de recouvrement (1.1, 1.2) entre lesquelles est disposée une charge (2), le procédé présentant les étapes suivantes :
- préparer un appui de chant (3) présentant un matériau thermoplastique,
- ancrer l'appui de chant (3) dans les deux couches de recouvrement (1.1, 1.2), l'ancrage s'effectuant en mettant l'appui de chant en contact avec la couche de recouvrement concernée et en appliquant dans l'appui de chant des oscillations mécaniques à l'aide d'une sonotrode (5) qui l'engage depuis son côté étroit, l'appui de chant (3) étant en même temps repoussé contre cette couche de recouvrement (1.1, 1.2) de telle sorte qu'au niveau de la transition entre le matériau thermoplastique et la couche de recouvrement, une partie du matériau thermoplastique se liquéfie et soit refoulée dans la couche de recouvrement, ce qui fournit après solidification des matériaux thermoplastiques un ancrage en correspondance géométrique,
- exécution ou répétition de l'ancrage jusqu'à ce qu'une partie étendue du côté étroit soit dotée de l'appui de chant (3) ou de plusieurs appuis de chant (3) et
- fixation d'un chant (11; 14) sur une surface extérieure de l'appui de chant de telle sorte que l'espace intermédiaire entre les couches de recouvrement et le côté étroit soit fermé dans ladite zone étendue.

2. Procédé selon la revendication 1, **caractérisé en ce que** la fixation du chant (14) sur la surface extérieure a lieu avant l'ancrage et par exemple dès la fabrication.

3. Procédé selon la revendication 1, **caractérisé en ce que** la fixation du chant (11) sur la surface extérieure a lieu après l'ancrage.

4. Procédé selon la revendication 3, **caractérisé en ce qu'**entre l'ancrage et la fixation du chant, une étape d'enlèvement du matériau des couches de recouvrement et/ou du matériau de l'appui de chant (3) ou des appuis de chant est réalisée dans ladite partie étendue du côté étroit.

5. Procédé selon les revendications 3 ou 4, **caractérisé en ce que** l'appui de chant (3) présente des premières parties (3.5) qui s'étendent parallèlement aux couches de recouvrement et des parties de transition (3.6) qui les relient, les premières parties (3.5) étant refoulées intérieurement contre l'une des couches de recouvrement lors de l'ancrage par la sonotrode (5), sous l'action d'une force qui agit perpendiculairement aux couches de recouvrement (1.1, 1.2).

6. Procédé selon la revendication 5, **caractérisé en ce que** les parties de transition s'étendent obliquement de telle sorte que l'appui de chant s'étende globalement en zigzag avec des premières parties (3.5) qui reposent en alternance contre la première couche de recouvrement (1.1) et contre la deuxième couche de recouvrement (1.2), ou forme une structure en treillis.

7. Procédé selon l'une des revendications 1 à 4, **caractérisé en ce que** l'appui de chant est ancré simultanément dans la couche supérieure et dans la couche inférieure de recouvrement.

8. Procédé selon la revendication 7, **caractérisé en ce que** plusieurs appuis de chant (3) distincts, reliés facultativement les uns aux autres par un élément de liaison, sont ancrés, les appuis de chant (3) étant lors de l'ancrage refoulés depuis le côté étroit contre les couches de recouvrement par une force appliquée parallèlement aux couches de recouvrement.

9. Procédé selon la revendication 8, **caractérisé en ce que** les appuis de chant présentent une partie adhérant au corps, qui les relient et qui s'étend entre les couches de recouvrement après l'ancrage.

10. Procédé selon la revendication 9, **caractérisé en ce que** les appuis de chant (3) présentent une partie de guidage (3.2) qui, est insérée avant l'application des oscillation mécaniques entre les couches de recouvrement et qui est en contact de surface avec le côté intérieur des deux couches de recouvrement (1.1, 1.2).

11. Procédé selon la revendication 9, **caractérisé en ce qu'**avant l'ancrage, les appuis de chant (3) présentent perpendiculairement aux couches de recouvrement (1.1, 1.2) une extension plus grande que la distance entre les couches de recouvrement et **en ce qu'**après l'ancrage, les appuis de chant sont situés entièrement entre les couches de recouvrement.

12. Procédé selon l'une des revendications précédentes, **caractérisé en ce que** pendant l'ancrage de l'appui de chant (3), une force de soutien (8) orientée vers l'intérieur est exercée sur la couche de recouvrement (1.1, 1.2) ou sur les couches de recouvrement.

13. Procédé de fabrication d'un élément léger de construction, le procédé présentant les étapes qui consistent à :
- préparer une plaque légère de construction constituée de deux couches de recouvrement entre lesquelles est disposée une charge,
- découper un flan dans la plaque légère de construction et
- fixer un chant sur le flan en appliquant un procédé selon l'une des revendications précédentes.

14. Appui de chant destiné à un procédé selon l'une des revendications précédentes et présentant un matériau thermoplastique qui forme des surfaces de contact (3.1) permettant de l'appliquer sur deux couches de recouvrement (1.1, 1.2) d'un élément léger de construction, l'appui de chant étant formé d'un seul tenant de telle sorte qu'il ne présente aucun élément qui déborde verticalement au-delà des couches de recouvrement lorsque les surfaces de contact (3.1) sont appliquées contre les couches de recouvrement, l'appui de chant présentant en outre une surface d'application (3.3) qui permet d'appliquer des oscillations mécaniques tout en repoussant au moins l'une des surfaces de contact (3.1) contre l'une des couches de recouvrement (1.1, 1.2), de telle sorte que du matériau thermoplastique se liquéfie au niveau de la surface de contact (3.1) et soit refoulé dans la couche de recouvrement, l'appui de chant présentant au moins des parties (3.2, 3.5, 3.6) conçues pour s'étendre dans la zone située entre les couches de recouvrement après l'application des oscillations mécaniques et en outre une surface extérieure de fixation qui s'étend perpendiculairement aux couches de recouvrement et parallèlement à la direction du côté étroit, pour fixer un chant doté d'un décor, ou présente un tel chant doté d'un décor,
**caractérisé par**
un dispositif d'orientation de l'application d'énergie au niveau des surfaces de contact (3.1).
